# EUROPEAN PATENT APPLICATION

(11) **EP 3 354 618 A1**
(43) Date of publication of application: **01.08.2018**
(21) Application number: 16848072.1
(22) Date of filing: 19.09.2016
(51) Int. Cl.: B67C 7/00

(54) **JUICER AUTOMATIC PACKAGING APPARATUS COMPRISING AUTOMATIC DOOR PANEL**

(30) Priority: 21.09.2015 CN 201520734517 U
(71) Applicant: Shanghai Geant Industrial Co., Ltd, Shanghai 201609 (CN)
(72) Inventor: ZHOU, Qi, Shanghai 201609 (CN)
(74) Representative: Gevers Patents
(86) International application number: PCT/CN2016/099283
(87) International publication number: WO 2017/050191

(57) **Abstract**

The present utility model discloses a juicer automatic packaging device including an automatic door sheet, and including an automatic cupping device and an automatic juice-out device. The automatic cupping device includes a base plate, a cup discharging device, a cover discharging device, and a cover pressing device. The cup discharging device, the cover discharging device and the cover pressing device are higher than the base plate, the base plate is connected to a motor I, and the motor I rotates to be capable of driving the base plate to rotate around the center of circle. The automatic juice-out device includes a funnel, a juice storage tube, a connecting piece, and a guide tube. The guide tube is connected to the bottom of the funnel. One end of the juice storage tube is closed, and the other end is provided with an opening. The upper part of the middle of the juice storage tube is additionally provided with an opening. The bottom of the guide tube is located in the opening at the upper part of the middle of the juice storage tube. The automatic packaging device further includes a door sheet, which includes a door sheet body and a goods outlet. An upper baffle is arranged above the goods outlet, and a lower baffle is arranged below the goods outlet. The door sheet further includes a motor IV, wherein the motor IV drives, through a transmission rod, the lower baffle to longitudinally move, and the upper baffle is connected to the door sheet body through an elastic device.

## Description

### BACKGROUND

### Technical Field

The present invention relates to a juicing machine, and in particular, to an automatic packaging device of a machine for juicing fruits.

### Related Art

Juicing, serving as a conventional technology, has been in existence for a long time. Researches on modern medicine and nutrition show that rich nutritional ingredients in fruits are necessary to a human body. Fruit juice also has functions of enhancing immunity, reducing diseases and delaying senescence. The fruit juice not only is nutrient-rich, but also contains relatively low calories, thereby more catering to the pursuit of modern people for a pretty figure. Due to the improvement of requirements for the quality of life, existing juicing machines cannot meet actual demands yet.

Although bottled or canned fruit juice produced by big modern machines can be preserved for a long time, it is inevitably necessary to add other raw materials, and a rot prevention technology is used to prolong the shelf life, and as a result, the degree of freshness cannot be guaranteed. Moreover, because of food safety affairs frequently breaking out in recent years, the confidence of consumers for this kind of products has been reduced to a low point.

Although a small-sized domestic juicer can ensure the freshness of a food material, the juice yield is low, it wastes time and energy to clean the juicer, and the juicer is only suitable for families with a small number of members.

It is precisely because of the defects of the foregoing juicer, service of juicing fresh fruits emerges in the streets of many cities. However, this service is supplied by floating street vendors, and an original squeezing machine is adopted to squeeze fruit juice manually. As a result, the efficiency is low, safety and sanitation cannot be guaranteed, and the environment is affected by produced fruit residues.

### SUMMARY

The present invention discloses a juicer automatic packaging device including an automatic door sheet, and including an automatic cupping device and an automatic juice-out device.

The automatic cupping device includes a base plate, a cup discharging device, a cover discharging device, and a cover pressing device. The cup discharging device, the cover discharging device and the cover pressing device are higher than the base plate, the base plate is connected to a motor I, and the motor I rotates to be capable of driving the base plate to rotate around the center of circle.

A cup aligning device is arranged on the base plate, and the bottom diameter of the aligning device being greater than the cup bottom diameter of a to-be-filled cup.

The cup discharging device includes a housing I, wherein an inner wall of the housing I is provided with more than two cup holding protruding portions.

A vertical distance between the cup holding protruding portions and the base plate is greater than the height of the to-be-filled cup.

The cover discharging device includes a housing II, wherein an inner wall of the housing II is provided with more than two cover holding protruding portions.

A vertical distance between the cover holding protruding portions and the base plate is greater than the height of the to-be-filled cup.

The cover pressing device includes a cover pressing plate, a rack, and a motor II with a gear. The rack is meshed with the gear of the motor II. The rack drives the cover pressing plate to move up and down.

When the round base plate rotates, the cup aligning device can be located right below the cup discharging device, the cover discharging device and the cover pressing device.

A leaked juice storage device is arranged below the base plate.

The automatic juice-out device includes a funnel, a juice storage tube, a connecting piece, and a guide tube, wherein the guide tube is connected to the bottom of the funnel, one end of the juice storage tube is closed, the other end is provided with an opening, the upper part of the middle of the juice storage tube is additionally provided with an opening, the bottom of the guide tube is located in the opening at the upper part of the middle of the juice storage tube, the bottom of the guide tube is provided with two protruding portions, the connecting piece tightly circles around the bottom of the juice storage tube, both ends are separately provided with an opening sleeving the corresponding protruding portion at the bottom of the guide tube, and the connecting piece can rotate around the two protruding portions.

A juice-out control device further includes a single-point liquid probe, wherein the single-point liquid probe is fixed to a transmission rod, the transmission rod is connected to the upper part of the opening end of the juice storage tube, the transmission rod is connected to a motor III, and the motor III moves to be capable of driving the transmission rod to move up and down and driving the juice storage tube to rotate around the protruding portions at the bottom of the guide tube. The juice-out control device further includes a controller I, the single-point probe being connected to the controller I. When the liquid probe probes liquid, an uplift signal is sent to the controller I, and the controller I controls the transmission rod to move up, so as to drive the end, with the opening, of the juice storage tube to be uplifted to be higher than the closed end.

The automatic packaging device further includes a door sheet, which includes a door sheet body and a goods outlet, wherein an upper baffle is arranged above the goods outlet, and a lower baffle is arranged below the goods outlet. The door sheet further includes a motor IV, wherein the motor IV drives, through the transmission rod, the lower baffle to longitudinally move, and the upper baffle is connected to the door sheet body through an elastic device. The top end of the goods outlet is laterally provided with two limiting devices. The limiting devices are connected to the motor IV, and can make the motor IV stop running.

The inner wall of the housing of the cup discharging device is provided with a gear I, each cup holding protruding portion is a shaft I with a gear, the upper and lower parts of each shaft I are provided with a spiral groove separately, and the two spiral grooves are intersected to form a gap.

The inner wall of the housing of the cover discharging device is provided with a gear II, each cover holding protruding portion is a shaft II with a gear, the upper and lower parts of each shaft II are provided with a spiral groove separately, and the two spiral grooves are intersected to form a gap.

The automatic cupping device is provided with a controller II, after receiving a cup falling signal, the controller II controls the base plate to rotate, the cup aligning device rotates to be under the cup discharging device, the shafts I with the gears rotate, a cup edge of the to-be-filled cup rotationally falls to the gap along the spiral grooves, and the to-be-filled cup falls into the cup aligning device.

The automatic cupping device is provided with a controller II, after receiving a cover falling signal, the controller II controls the base plate to rotate, the cup aligning device rotates to be under the cover discharging device, the shafts II with the gears rotate, a cover edge of a to-be-filled cup cover rotationally falls to the gap along the spiral grooves, and the to-be-filled cup cover falls onto the to-be-filled cup.

The automatic cupping device is provided with a photoelectric sensor I, and after receiving the cup falling signal, the controller II controls the photoelectric sensor I to send a detection signal to confirm whether a cup falls.

The automatic cupping device is provided with a photoelectric sensor II, and after receiving the cover falling signal, the controller II controls the photoelectric sensor II to send a detection signal to confirm whether a cup cover falls.

The controller I can receive a lowering signal, and the controller I controls the transmission rod to move down, so as to drive the end, with the opening, of the juice storage tube to be lowered to be lower than the closed end.

There are two single-point liquid probes, which are located in the same vertical height, and when the two single-point probes are immersed into liquid at the same time, a closed loop is formed.

The controller I and the controller II are single-chip computers.

Compared with the prior art, the present invention resolves the problem that the environmental sanitation of a traditional street juicing machine cannot be ensured, achieves complete automation from juice out to covering, and eliminates a manual intervention process.

### BRIEF DESCRIPTION OF THE DRAWINGS

FIG. 1 is an overall schematic diagram of an automatic cupping device.
FIG. 2 is a diagram of a position relationship between a cover pressing device and a base plate.
FIG. 3 is a schematic diagram of a cover pressing device.
FIG. 4 is a schematic diagram of a base plate and an aligning device.

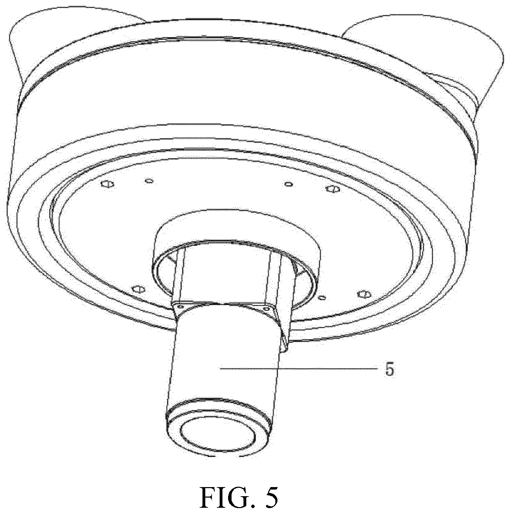

FIG. 5 is a schematic diagram of a bottom surface of a base plate.
FIG. 6 and FIG. 8 are schematic diagrams of a cup discharging device respectively.
FIG. 7 and FIG. 9 are schematic diagrams of a cup discharging device respectively.
FIG. 10 is a schematic diagram of a shaft device with a gear.
FIG. 11 is an overall schematic diagram from one side of a cup discharging device.
FIG. 12 is an overall schematic diagram from one side of a cover discharging device.
FIG. 13 is a schematic diagram of a shaft device with a gear from the perspective of the bottom.
FIG. 14 is a schematic diagram of a cup discharging device filled with a cup.

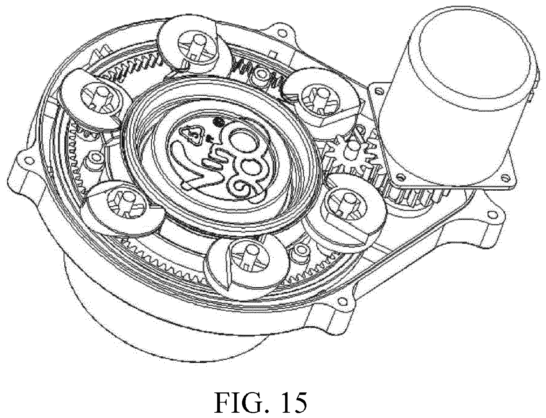

FIG. 15 is a schematic diagram of a cup discharging device filled with a cup cover.
FIG. 16 is a schematic diagram of a juice-out control device.
FIG. 17 is a schematic diagram of connection among a juice storage tube, a guide tube and a transmission rod.
FIG. 18 is an operating schematic diagram of a juice-out control device.
FIG. 19 is a leaked juice storage device.
FIG. 20 is a schematic diagram of connection between an automatic cupping device and an automatic juice-out device.
FIG. 21 is an overall schematic diagram of an automatic packaging device.
FIG. 22 is a front schematic diagram of a door sheet of a vending machine.
FIG. 23 is a back schematic diagram of a door sheet of a vending machine (a lower baffle is not uplifted).
FIG. 24 is a back schematic diagram of a door sheet of a vending machine (a lower baffle is already uplifted).
FIG. 25 and FIG. 26 are overall schematic diagrams of an automatic cupping device, an automatic juice-out device and a door sheet.

### Description of drawing marks

1-Base plate
2-Cup discharging device
3-Cover discharging device
4-Cover pressing device
5-Motor I
6-Cup aligning device
7-Cover pressing plate
8-Rack
9-Motor II
10-Housing I
11-Cup holding protruding portion
12-Housing II
13-Cover holding protruding portion
14-Annular gear I
15-Shaft I with gear
16-Annular gear II
17-Shaft II with gear
18-Photoelectric sensor I
19-Photoelectric sensor II
20-Transmission gear I
21-Motor V
22-Transmission gear II
23-Motor VI
24-Limiting switch
25-Leaked juice storage device
201-Funnel
202-Juice storage tube
203-Connecting piece
204-Opening at one end of juice storage tube
205-Opening at upper part of middle of juice storage tube
206-Protruding portion
207-Liquid probe
208-Transmission rod
209-Guide tube
210-Cup

### DETAILED DESCRIPTION

The detailed description is made hereinbelow in conjunction with the drawings.

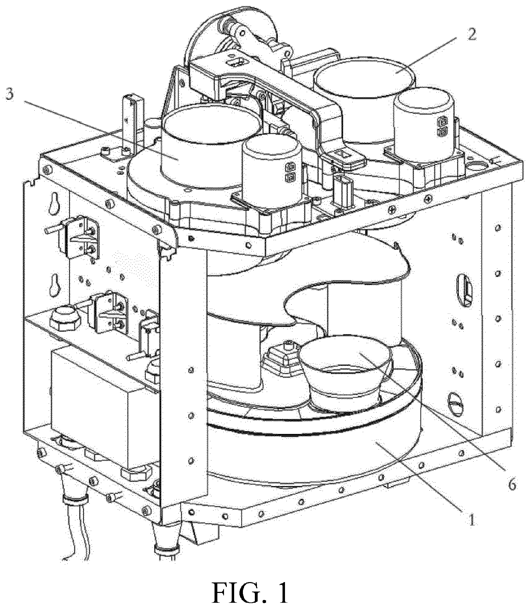

As shown in FIG. 1, a juicer automatic cupping device includes a base plate (1), a cup discharging device (2), a cover discharging device (3), and a cover pressing device (4). The cup discharging device (2), the cover discharging device (3) and the cover pressing device (4) are higher than the base plate, the base plate(1) is connected to a motor I (5), and the motor I (5) rotates to be capable of driving the base plate (1) to rotate around the center of circle.

A cup aligning device (6) is arranged on the base plate (1), and the bottom diameter of the aligning device (6) being greater than the cup bottom diameter of a to-be-filled cup.

The cup discharging device (2) includes a housing I (10), wherein an inner wall of the housing I (10) includes more than two cup holding protruding portions (11), and a vertical distance between the cup holding protruding portions (11) and the base plate (1) is greater than the height of the to-be-filled cup. The cup holding protruding portions have a function of holding, when cups do not fall, the cups and making the cups fall one by one through the cup holding protruding portions as needed.

The cover discharging device (3) includes a housing II (12), wherein an inner wall of the housing II (12) includes more than two cover holding protruding portions (13), and a vertical distance between the cover holding protruding portions (13) and the base plate (1) is greater than the height of the to-be-filled cup. The cover holding protruding portions have a function of holding, when cup covers do not fall, the cup covers and making the cups fall one by one through the cover holding protruding portions as needed.

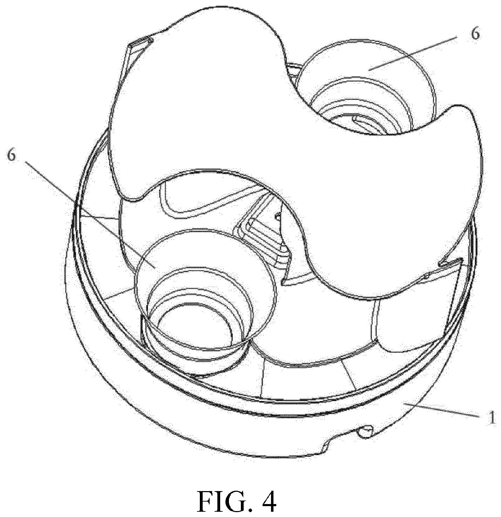

As shown in FIG. 4, plate reinforced members can be arranged on the base plate (1) for reinforcement.

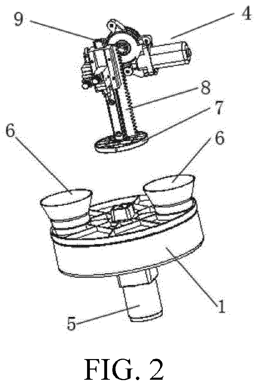

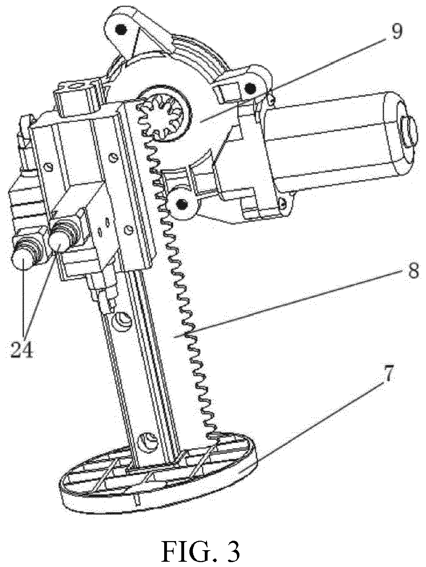

As shown in FIG. 2 and FIG. 3, the cover pressing device includes a cover pressing plate (7), a rack (8), and a motor II (9) with a gear. The rack (8) is meshed with the gear of the motor II (9). The rack (8) drives the cover pressing plate (7) to move up and down.

When the round base plate rotates, the cup aligning device (6) can be located right below the cup discharging device (2), the cover discharging device (3) and the cover pressing device (4).

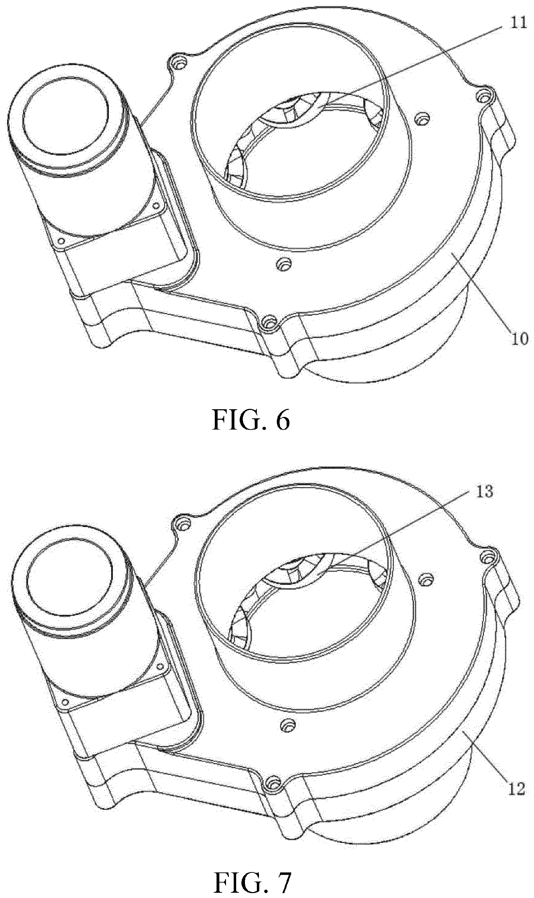

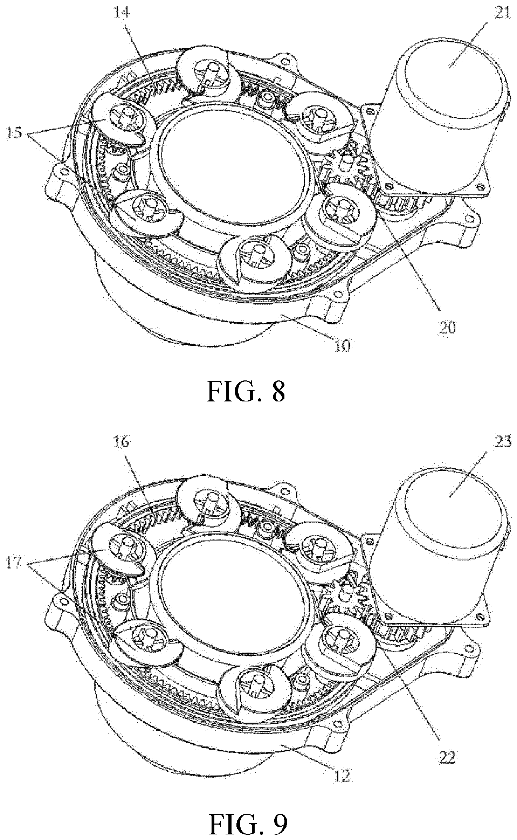

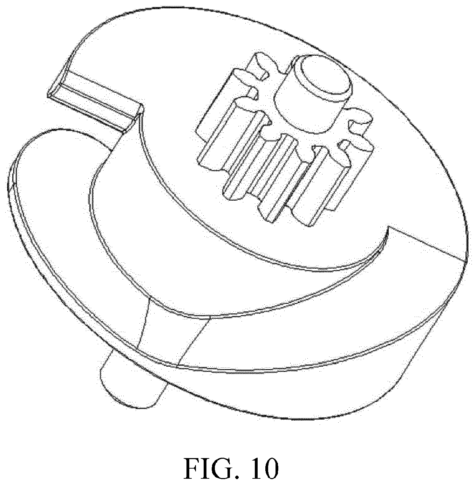

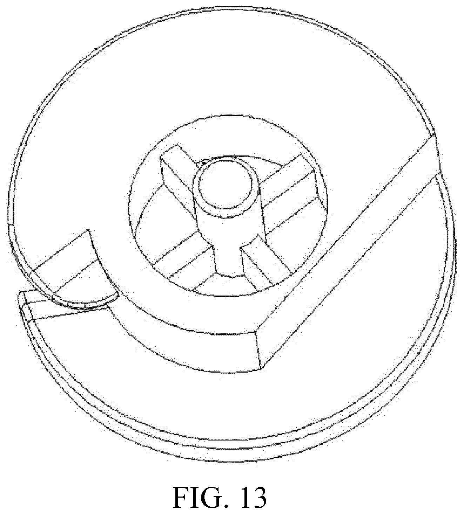

As shown in FIG. 6 and FIG. 8, the inner wall of the housing of the cup discharging device (2) is provided with an annular gear I (14), each cup holding protruding portion (11) is a shaft I (15) with a gear (as shown in FIG. (10)), the shafts I (15) with the gears engage, through the gears, with the annular gear I (14) arranged on the inner wall of the housing of the cup discharging device (2), the annular gear I (14) is additionally connected to a transmission gear I (20), the transmission gear I (20) is connected to a motor V (21), when the motor V rotates, the transmission gear I (20) is driven, and the annular gear I (14) is driven. As shown in FIG. 10 and FIG. 13, the upper and lower parts of each shaft I (15) are provided with a spiral groove separately, and the two spiral grooves are intersected to form a gap.

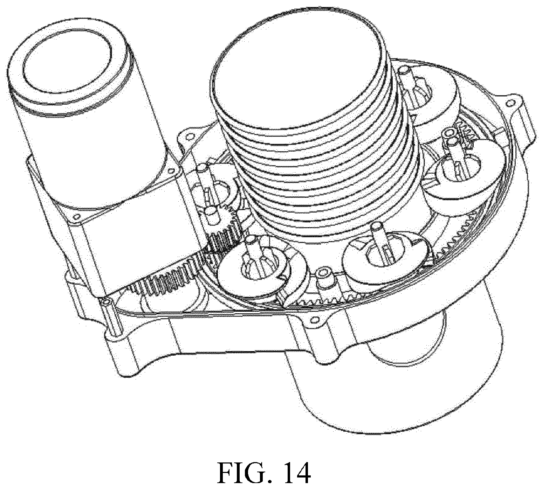

As shown in FIG. 14, the cup discharging device receives a cup, there may be one or more cups stacked together, the cup should include a cup edge of which the diameter is slightly greater than that of a cup body, and when the cup does not fall, the cup edge is held on the shafts. As shown in FIG. 6 and FIG. 8, the automatic cupping device is provided with a controller II which may be a single-chip computer, after receiving a cup falling signal (such as a cup falling signal started after a user inserts a coin), the single-chip computer controls the base plate to rotate, the cup aligning device rotates to be under the cup discharging device, and the single-chip computer controls the motor V (21) to rotate, so as to drive the transmission gear I (20) and to drive the annular gear I (14). Generally, there are more than two shafts (15), which may stably form a plane, the cup is held on the plane, when the shafts I (15) are distributed on the annular gear, an angle difference is formed with respect to the center of circle, and the relative angle difference of the gap on each shaft I (15) is identical to the foregoing angle difference, so that after each shaft I (15) is driven to rotate by the annular gear, the cup edge rotates to the gap along the spiral grooves, a plurality of points of the cup edge reaches the gap at the same time, and a cup falls into the cup aligning device.

As shown in FIG. 7 and FIG. 9, similar to the cup discharging device, the inner wall of the housing of the cover discharging device (3) is provided with an annular gear II (16), each cover holding protruding portion (13) is a shaft II (17) with a gear (as shown in FIG. (10)), the shafts II (17) with the gears engage, through the gears, with the annular gear II (16) arranged on the inner wall of the housing of the cover discharging device (3), the annular gear II (16) is additionally connected to a transmission gear II (22), the transmission gear II (22) is connected to a motor VI (23), when the motor VI (23) rotates, the transmission gear II (22) is driven, and the annular gear II (16) is driven. As shown in FIG. 10 and FIG. 13, the upper and lower parts of each shaft II (17) are provided with a spiral groove separately, and the two spiral grooves are intersected to form a gap.

The cover discharging device receives a cover, there may be one or more covers stacked together, the cover should include a cover edge of which the diameter is slightly greater than that of the cover, and when the cover does not fall, the cover edge is held on the shafts. The automatic cupping device is provided with a controller II which may be a single-chip computer, after receiving a cover falling signal, the single-chip computer controls the base plate to rotate, the cup aligning device rotates to be under the cover discharging device, and the single-chip computer controls the motor VI (23) to rotate, so as to drive the transmission gear II (22) and to drive the annular gear II (16). Generally, there are more than two shafts (17), which may stably form a plane, the cover is held on the plane, when the shafts II (17) are distributed on the annular gear II (16), an angle difference is formed with respect to the center of circle, and the relative angle difference of the gap on each shaft II (17) is identical to the foregoing angle difference, so that after each shaft II (17) is driven to rotate by the annular gear, the cover edge rotates to the gap along the spiral grooves, a plurality of points of the cover edge reaches the gap at the same time, and a cover falls onto the cup on the cup aligning device.

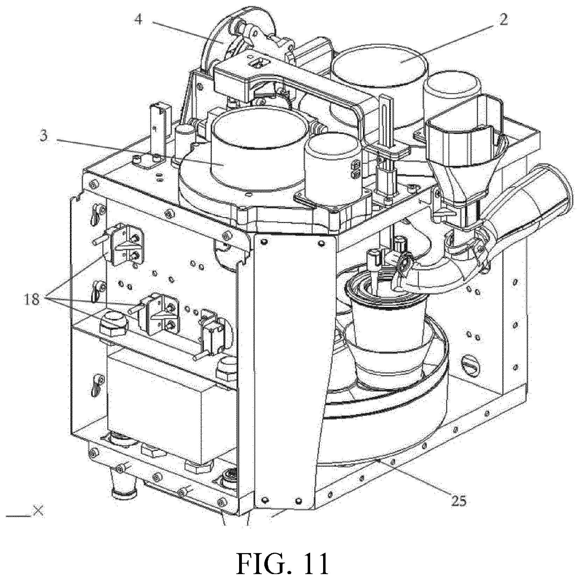

As shown in FIG. 11, the automatic cupping device is provided with a photoelectric sensor I (18), after receiving the cup falling signal, the controller II controls the photoelectric sensor I (18) to send a detection signal to confirm whether a cup falls, and information obtained after detection is returned to the controller II.

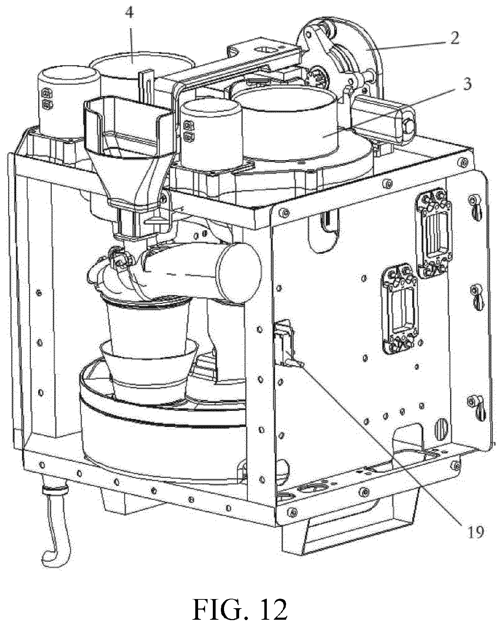

As shown in FIG. 12, the automatic cupping device is provided with a photoelectric sensor II (19), after receiving the cover falling signal, the controller II controls the photoelectric sensor II (19) to send a detection signal to confirm whether a cup cover falls, and information obtained after detection is returned to the controller II.

In a specific embodiment of the present device, the motor I, the motor II, the motor IV, the motor V, the motor VI, the photoelectric sensor I and the photoelectric sensor II are all connected to the controller II through a circuit, the controller II controls the base plate to drive the cup aligning device to first operate to the cup discharging device (2), a cup falls from the cup discharging device (2), the photoelectric sensor I (18) sends a detection signal to confirm whether the cup falls, then the controller II controls the base plate to drive the cup aligning device to a juice outlet to make the cup full of fruit juice, then the controller II controls the base plate to drive the cup aligning device to the cover discharging device (3), a cover falls from the cover discharging device (3), the photoelectric sensor II (19) sends a detection signal to confirm whether the cover falls, then the controller II controls the base plate to drive the cup aligning device to the cover pressing device (4), the motor II (9) with the gear drives the rack (8), so as to further drive the cover pressing plate (7) to move up and down, the cover pressing device (4) may be provided with a limiting switch (24), so as to control the motion amplitude of the cover pressing plate (7), and when the cover pressing plate (7) moves to tightly cover the cup with the cup cover, the cover pressing plate stops. Then, the controller II controls the base plate to drive the cup aligning device to an opening. At this moment, the cup full of the fruit juice and already tightly covered with the cover can be taken away.

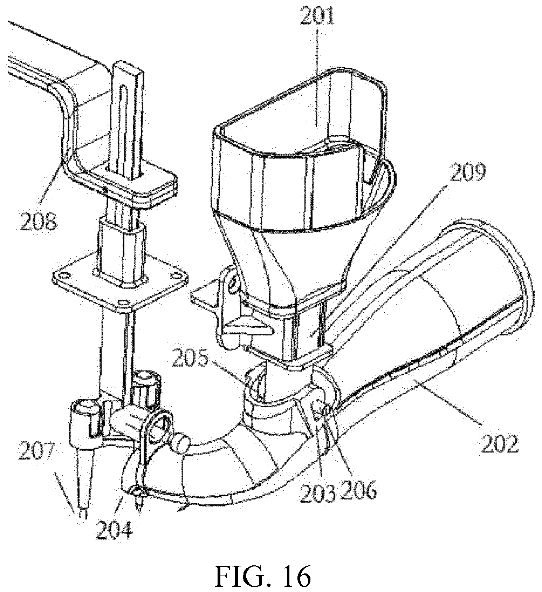

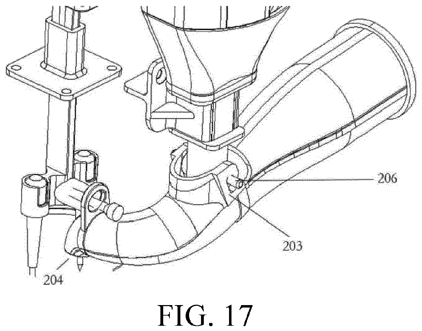

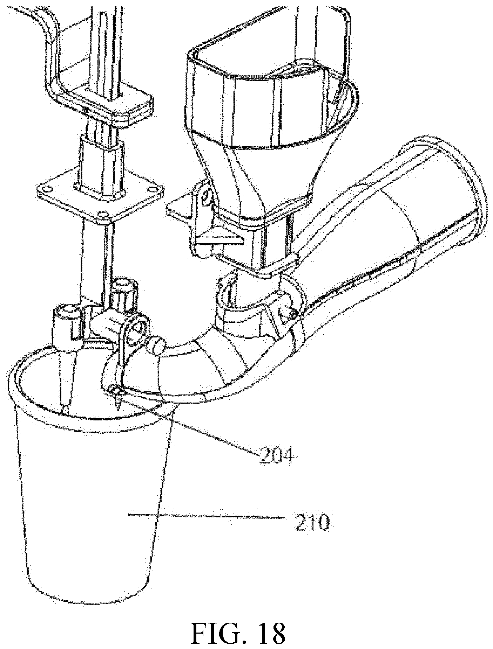

As shown in FIG. 16 to FIG. 18, a juice-out control device includes a funnel (201), a juice storage tube (202), a connecting piece (203), and a guide tube (209). The guide tube (209) is connected to the bottom of the funnel (201). One end of the juice storage tube is closed, and the other end is provided with an opening (204). The upper part of the middle of the juice storage tube is additionally provided with an opening (205). The bottom of the guide tube (209) is located in the opening at the upper part of the middle of the juice storage tube. The bottom of the guide tube (209) is provided with two protruding portions (206). The connecting piece tightly circles around the bottom of the juice storage tube. Both ends are separately provided with an opening sleeving the corresponding protruding portion at the bottom of the guide tube (209). The connecting piece can rotate around the two protruding portions. The juice-out control device further includes a liquid probe (207), wherein the liquid probe is fixed to a transmission rod (208), the transmission rod is connected to the upper part of the opening end of the juice storage tube, the transmission rod is connected to a motor III, and the motor III moves to be capable of driving the transmission rod to move up and down and driving the juice storage tube to rotate around the protruding portions at the bottom of the guide tube (209). The liquid probe is connected to a controller.

When the juice-out control device does not operate, one end, with the opening (204), of the juice storage tube (202) is higher than the other end. When the juice-out control device starts to operate actually, the motor III moves to drive the transmission rod (208) to move down and to drive the juice storage tube to rotate around the protruding portions at the bottom of the guide tube (209), one end, with the opening (204), of the juice storage tube (202) is lower than the other end, one end, with the opening (204), of the juice storage tube (202) is close to the liquid probe (207), and a cup (210) is located below one end, with the opening (204), of the juice storage tube (202) and the liquid probe (207).

After oranges are squeezed, orange juice is guided into the funnel. Due to different sizes of the oranges, orange juice yields are different, and the quantity of oranges filling up a cup cannot be accurately calculated. For example, if orange juice does not fill up the cup after two oranges are squeezed, orange juice obtained by squeezing the third orange continuously flows out of the juice storage tube (202) and rises up to be in contact with the tip of the liquid probe (207), when the orange juice is probed by the liquid probe, the probe sends an uplift signal to the controller I, the controller I controls the transmission rod to move up, so as to drive the end, with the opening, of the juice storage tube to be uplifted to be higher than the closed end, and the orange juice will not flow out of the end, with the opening, of the juice storage tube any longer.

There are two liquid probes, which are located in the same vertical height, and when the two probes are immersed into liquid at the same time, a closed loop is formed.

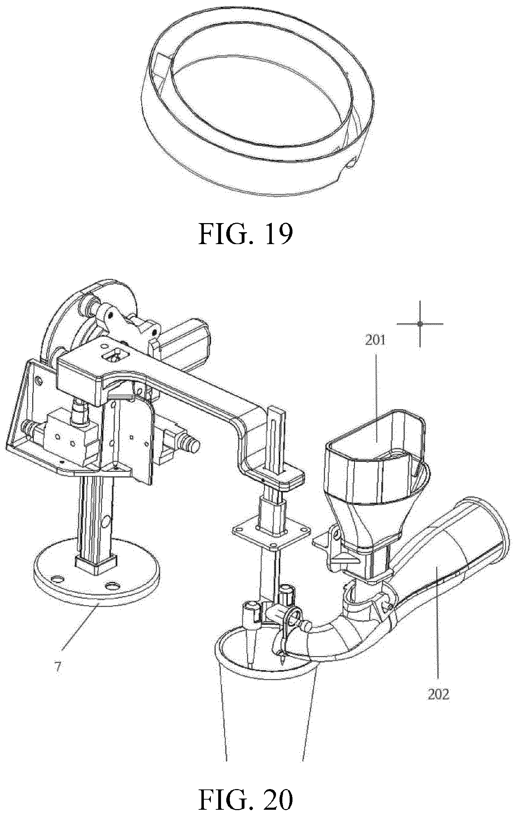

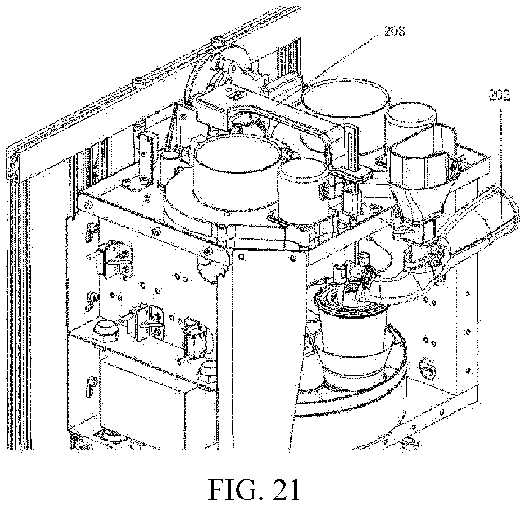

As shown in FIG. 20 and FIG. 21, structurally speaking, the juice-out control device is connected to the automatic cupping device through the transmission rod; and functionally speaking, after a cup falls onto the automatic cupping device, the juice-out control device outputs juice to a set position, and after the base plate rotates, a cover falls onto the automatic cupping device.

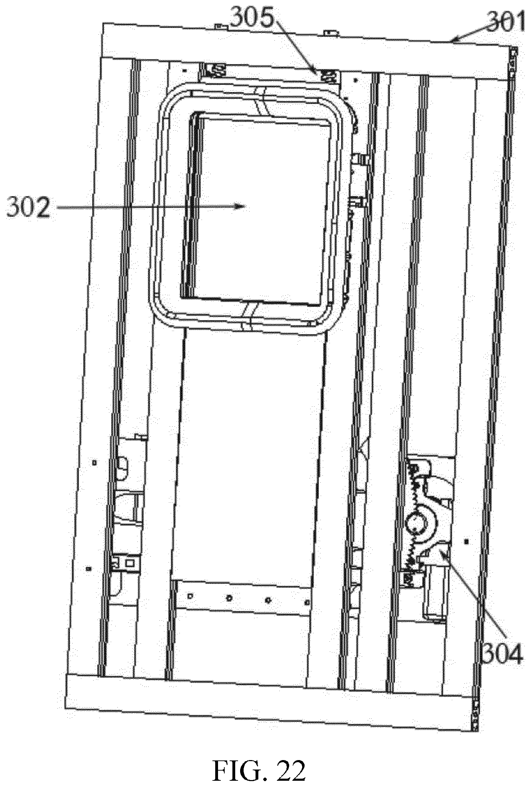

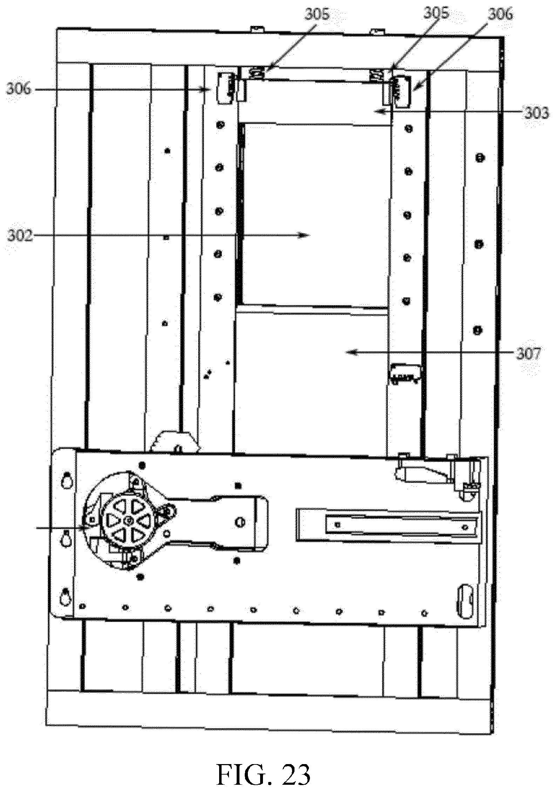

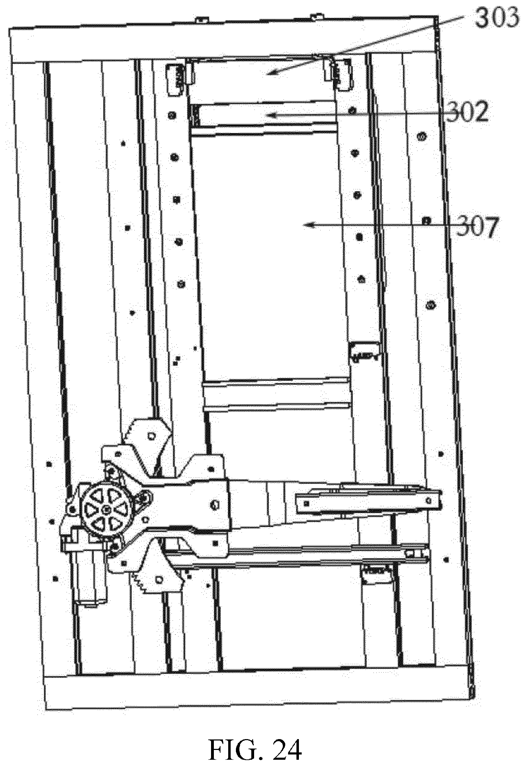

As shown in FIG. 22 to FIG. 24, the door sheet includes a door sheet body (301) and a goods outlet (302), wherein an upper baffle (303) is arranged above the goods outlet (302), a lower baffle (307) is arranged below the goods outlet (302), the door sheet further includes a motor IV (304), the motor IV (304) drives, through the transmission rod, the lower baffle (307) to longitudinally move, and the upper baffle (303) is connected to the door sheet body (301) through an elastic device (305).

The top end of the goods outlet (302) is laterally provided with a photoelectric device (306), and the photoelectric device (306) is connected to the motor IV (304), and can make the motor IV (304) stop running. If a moving door touches a hand when moving up, the moving door will be automatically opened, thereby achieving an anti-pinch function.

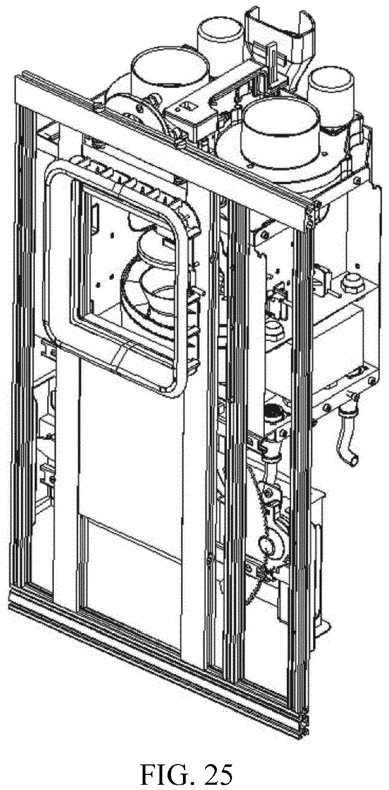

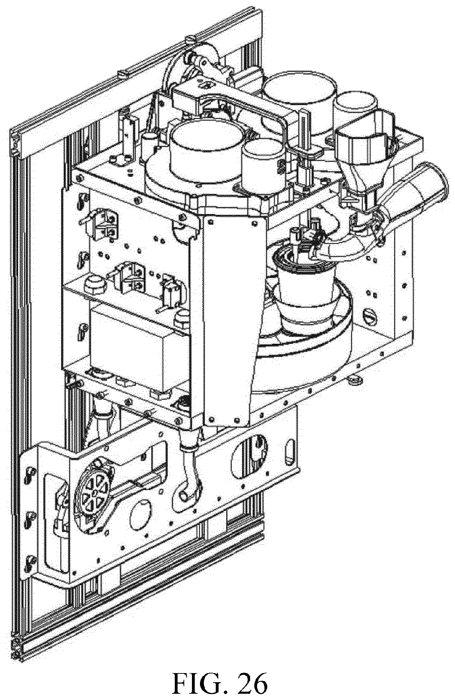

FIG. 25 and FIG. 26 are overall schematic diagrams of three main components of the present invention, that is, an automatic cupping device, an automatic juice-out device and a door sheet.

The content is only basic description under the concept of the present invention, and any equivalent changes made according to the technical solution of the present invention should fall within the scope of protection of the present invention.

## Claims

1. A juicer automatic packaging device comprising an automatic door sheet, and comprising an automatic cupping device and an automatic juice-out device, the juicer automatic packaging device being **characterized in that**:
the automatic cupping device comprises a base plate (1), a cup discharging device (2), a cover discharging device (3), and a cover pressing device (4), the cup discharging device (2), the cover discharging device (3) and the cover pressing device (4) are higher than the base plate, the base plate (1) is connected to a motor I (5), the motor I (5) rotates to be capable of driving the base plate (1) to rotate around the center of circle,
a cup aligning device (6) is arranged on the base plate (1), the bottom diameter of the aligning device (6) is greater than the cup bottom diameter of a to-be-filled cup,
the cup discharging device (2) comprises a housing I (10), an inner wall of the housing I (10) is provided with more than two cup holding protruding portions (11), a vertical distance between the cup holding protruding portions (11) and the base plate (1) is greater than the height of the to-be-filled cup,
the cover discharging device (3) comprises a housing II (12), an inner wall of the housing II (12) is provided with more than two cover holding protruding portions (13), a vertical distance between the cover holding protruding portions (13) and the base plate (1) is greater than the height of the to-be-filled cup,
the cover pressing device comprises a cover pressing plate (7), a rack (8), and a motor II (9) with a gear, the rack (8) is meshed with the gear of the motor II (9), the rack (8) drives the cover pressing plate to move up and down, and
when the round base plate rotates, the cup aligning device (6) can be located right below the cup discharging device (2), the cover discharging device (3) and the cover pressing device (4);
a leaked juice storage device (25) is arranged below the base plate (1);
the automatic juice-out device comprises a funnel (201), a juice storage tube (202), a connecting piece (203), and a guide tube (209), the guide tube (209) is connected to the bottom of the funnel (201), one end of the juice storage tube (202) is closed, the other end is provided with an opening (204), the upper part of the middle of the juice storage tube is additionally provided with an opening (205), the bottom of the guide tube (209) is located in the opening at the upper part of the middle of the juice storage tube, the bottom of the guide tube (209) is provided with two protruding portions (206), the connecting piece tightly circles around the bottom of the juice storage tube, both ends are separately provided with an opening sleeving the corresponding protruding portion at the bottom of the guide tube (209), the connecting piece can rotate around the two protruding portions,
a juice-out control device further comprises a single-point liquid probe (207), the single-point liquid probe (207) is fixed to a transmission rod (208), the transmission rod is connected to the upper part of the opening end of the juice storage tube, the transmission rod is connected to a motor III, the motor III moves to be capable of driving the transmission rod to move up and down and driving the juice storage tube to rotate around the protruding portions at the bottom of the guide tube (209), the juice-out control device further comprises a controller I, the single-point probe is connected to the controller I, when the liquid probe probes liquid, an uplift signal is sent to the controller I, the controller I controls the transmission rod to move up, so as to drive the end, with the opening, of the juice storage tube to be uplifted to be higher than the closed end,
the automatic packaging device further comprises a door sheet, which comprises a door sheet body (301) and a goods outlet (302), an upper baffle (303) is arranged above the goods outlet (302), a lower baffle (307) is arranged below the goods outlet (302), the door sheet further comprises a motor IV (304), the motor IV (304) drives, through the transmission rod, the lower baffle (307) to longitudinally move, and the upper baffle (303) is connected to the door sheet body (301) through an elastic device (305); and the top end of the goods outlet (302) is laterally provided with two limiting devices (306), and the limiting devices (306) are connected to the motor IV (304), and can make the motor IV (304) stop running.

2. The juicer automatic packaging device comprising an automatic door sheet of claim 1, **characterized in that** the inner wall of the housing of the cup discharging device (2) is provided with a gear I (14), each cup holding protruding portion (11) is a shaft I (15) with a gear, the upper and lower parts of each shaft I (15) are provided with a spiral groove separately, and the two spiral grooves are intersected to form a gap.

3. The juicer automatic packaging device comprising an automatic door sheet of claim 1, **characterized in that** the inner wall of the housing of the cover discharging device (3) is provided with a gear II (16), each cover holding protruding portion (13) is a shaft II (17) with a gear, the upper and lower parts of each shaft II (17) are provided with a spiral groove separately, and the two spiral grooves are intersected to form a gap.

4. The juicer automatic packaging device comprising an automatic door sheet of claim 2, **characterized in that** the automatic cupping device is provided with a controller II, after receiving a cup falling signal, the controller II controls the base plate to rotate, the cup aligning device (6) rotates to be under the cup discharging device (2), the shafts I (15) with the gears rotate, a cup edge of the to-be-filled cup rotationally falls to the gap along the spiral grooves, and the to-be-filled cup falls into the cup aligning device (6).

5. The juicer automatic packaging device comprising an automatic door sheet of claim 3, **characterized in that** the automatic cupping device is provided with a controller II, after receiving a cover falling signal, the controller II controls the base plate to rotate, the cup aligning device (6) rotates to be under the cover discharging device (3), the shafts II (17) with the gears rotate, a cover edge of a to-be-filled cup cover rotationally falls to the gap along the spiral grooves, and the to-be-filled cup cover falls onto the to-be-filled cup.

6. The juicer automatic packaging device comprising an automatic door sheet of claim 4, **characterized in that** the automatic cupping device is provided with a photoelectric sensor I (18), and after receiving the cup falling signal, the controller II controls the photoelectric sensor I (18) to send a detection signal to confirm whether a cup falls.

7. The juicer automatic packaging device comprising an automatic door sheet of claim 5, **characterized in that** the automatic cupping device is provided with a photoelectric sensor II (19), and after receiving the cover falling signal, the controller II controls the photoelectric sensor II (19) to send a detection signal to confirm whether a cup cover falls.

8. The juicer automatic packaging device comprising an automatic door sheet of claim 1, **characterized in that** the controller I can receive a lowering signal, and the controller I controls the transmission rod to move down, so as to drive the end, with the opening, of the juice storage tube (202) to be lowered to be lower than the closed end.

9. The juicer automatic packaging device comprising an automatic door sheet of claim 1, **characterized in that** there are two single-point liquid probes (207), which are located in the same vertical height, and when the two single-point probes (207) are immersed into liquid at the same time, a closed loop is formed.

10. The juicer automatic packaging device comprising an automatic door sheet of claim 1, **characterized in that** the controller I and the controller II are single-chip computers.
